# NEUE EUROPÄISCHE PATENTSCHRIFT

(11) **EP 2 086 879 B2**
(45) Veröffentlichungstag und Bekanntmachung des Hinweises auf die Entscheidung über den Einspruch: **25.06.2014**
(45) Hinweis auf die Patenterteilung: 29.06.2011
(21) Anmeldenummer: 07821225.5
(22) Anmeldetag: 12.10.2007
(51) Int. Cl.: C01B 33/107

(54) **VERFAHREN ZUR HERSTELLUNG VON TRICHLORSILAN**
METHOD FOR THE PRODUCTION OF TRICHLOROSILANE
PROCÉDÉ DE PRÉPARATION DE TRICHLOROSILANE

(30) Priorität: 25.10.2006 DE 102006050329
(43) Veröffentlichungstag der Anmeldung: 12.08.2009
(73) Patentinhaber: Wacker Chemie AG, 81737 München (DE)
(72) Erfinder: PFLÜGLER, Bernhard, 84489 Burghausen (DE); RING, Robert, 84489 Burghausen (DE)
(74) Vertreter: Potten, Holger
(86) Internationale Anmeldenummer: PCT/EP2007/060858
(87) Internationale Veröffentlichungsnummer: WO 2008/049740

(56) Entgegenhaltungen:
- EP-B1- 0 052 615
- WO-A2-2006/081980
- DE-A1- 3 024 319
- DE-A1- 3 311 650
- DE-A1-102004 019 760
- DE-A1-102005 005 044
- J. ACKER ET AL.: 'Gewinnung von Precursor-Verbindungen zur Reinstsiliciumherstellung' FREIBERGER FORSCHUNGSHEFTE / B327 2004, Seiten 21 - 34
- P. W. ATKINS: 'Physikalische Chemie', Bd. 2, 1996, VCH-VERLAG, NEW-YORK Seite 32, 33, 818, 819, 822, 833

## Beschreibung

Die Erfindung betrifft ein Verfahren zur Herstellung von Trichlorsilan mittels thermischer Hydrierung im überkritischen Druckbereich.

Bei der Umsetzung von Trichlorsilan mit Wasserstoff zur Herstellung von polykristallinem Silizium fallen große Mengen an Tetrachlorsilan an. Das Tetrachlorsilan kann durch die Tetrachlorsilankonvertierung, eine katalytische bzw. thermische Dehydrohalogenierungsreaktion von Tetrachlorsilan mit Wasserstoff, wieder zu Trichlorsilan und Chlorwasserstoff umgewandelt werden. Zur Konvertierung von Tetrachlorsilan in Trichlorsilan sind zwei Verfahrensvarianten bekannt. Die Niedertemperaturkonvertierung erfolgt in Anwesenheit von Silizium und einem Katalysator bei Temperaturen im Bereich 400°C bis 700°C. Die Patente US 2595620, US 2657114 (Union Carbide and Carbon Corporation / Wagner 1952) und US 2943918 (Compagnie de Produits Chimiques et electrometallurgiques / Pauls 1956) berichten über eine partielle Hydrierung von Tetrachlosilan in Anwesenheit von Katalysatoren (z.B. metallischen Chloriden).

Da die Anwesenheit von Katalysatoren, z.B. Kupfer, zu Verunreinigungen des Trichlorsilan und des daraus hergestellten polykristallinen Siliziums führen kann, wurde ein zweites Verfahren, das Hochtemperaturverfahren, entwickelt. Bei diesem Verfahren werden die Edukte Tetrachlorsilan und Wasserstoff bei höheren Temperaturen als beim Niedertemperaturverfahren ohne Katalysator zu Trichlorsilan umgesetzt. Die Tetrachlorsilankonvertierung ist ein endothermer Prozess, wobei die Bildung der Produkte gleichgewichtslimitiert ist. Um überhaupt zu einer signifikanten Ausbeute and Trichlorsilan zu gelangen, müssen im Reaktor hohe Temperaturen (> 900 °C) vorliegen. So beschreibt US-A 3933985 (Motorola INC / Rodgers 1976) die Umsetzung von Tetrachlorsilan mit Wasserstoff zu Trichlorsilan bei Temperaturen im Bereich von 900°C bis 1200°C und mit einem Molverhältnis H₂:SiCl₄ von 1:1 bis 3:1. Es werden dabei Trichlorsilan Ausbeuten von 12 - 13 % erreicht.

US-A 4217334 (Degussa / Weigert 1980) beschreibt ein optimiertes Verfahren zur Umwandlung von Tetrachlorsilan in Trichlorsilan mittels der Hydrierung von Tetrachlorsilan mit Wasserstoff in einem Temperaturbereich von 900°C bis 1200°C. Durch ein hohes Molverhältnis H₂:SiCl₄ (bis 50:1) und eine Flüssigkeitsquenche des heißen Produktgases unter 300°C (Flüssigkeit: Produkt oder inerte Flüssigkeit, Abkühlzeiten 50 ms) werden deutlich höhere Trichlorsilanausbeuten (bis ca. 35 % bei einem H₂:SiCl₄ Verhältnis von 5:1) erzielt. Nachteil dieses Verfahrens ist der deutlich höhere Wasserstoffanteil im Reaktionsgas sowie die angewendete Quenche mittels einer Flüssigkeit, da beides den energetischen Aufwand und damit die Kosten des Verfahrens stark erhöht. Die Quenche ist notwendig um das sich auf der SiHCl₃ und HCl Seite befindliche Reaktionsgleichgewicht einzufrieren.

Auch aus US 4,217,334 ist bekannt, dass es vorteilhaft ist das Gleichgewicht durch quenchen "Einzufrieren". In US 4217334 geschieht dies durch sofortiges Quenchen mit SiCl₄ von 1100°C auf 300 °C. Auch dieses Verfahren ist energetisch unbefriedigend und damit teuer.

Das Abstract zu JP60081010 (Denki Kagaku Kogyo K.K./ 1985) beschreibt ein Quench-Verfahren bei niedrigeren H₂:SiCl₄ - Verhältnissen zur Erhöhung des Trichlorsilangehaltes im Produktgas. Die Temperaturen im Reaktor liegen bei 1200°C bis 1400°C; das Reaktionsgemisch wird innerhalb einer Sekunde bis auf weniger als 600°C abgekühlt. Auch bei diesem Quench-Verfahren geht die Energie des Reaktionsgases zum Großteil verloren, was sich stark negativ auf die Wirtschaftlichkeit des Verfahrens auswirkt.

DE 3024319 beschreibt ein kontinuierliches Verfahren, bei dem ein Gemisch aus Tetrachlorsilan und Wasserstoff in einem Hochtemperaturreaktor bei 900 -1300 °C reagiert und bei dem der entstehende Chlorwasserstoff nach Abkühlung in einem Nachreaktor an einem Siliciumkontakt bei 280 bis 350°C zu weiterem Trichlorsilan umgesetzt wird. Das nicht umgesetzte Tetrachlorsilan und der nicht umgesetzte Wasserstoff werden wieder dem Hochtemperaturreaktor zugeführt. Vorzugsweise wird dieses Verfahren bei 1 bis 6 bar durchgeführt. Um die Energieeffizienz des Verfahrens zu erhöhen, wird in DE 3024319 eine Wärmeaustauschereinheit an dem Hochtemperaturreaktor integriert.

Aufgrund der zunehmenden wirtschaftlichen Bedeutung der Produktion von polykristallinem Silicium z.B. für die Photovoltaik und der ständig steigenden Energiepreise wurden in den vergangenen Jahren verstärkt Anstrengungen unternommen, den Primärenergieeinsatz bei der Silankonvertierung bezogen auf die Trichlorsilan Ausbeute effizienter zu gestalten. Aufgabe der Erfindung war es, ein kostengünstiges Verfahren zur Herstellung von Trichlorsilan mittels thermischer Hydrierung von Tetrachlorsilan zur Verfügung zu stellen, welches eine hohe Trichlorsilan-Ausbeute mit einer im Vergleich zum Stand der Technik erhöhten Wirtschaftlichkeit ermöglicht.

Die Aufgabe wird gelöst durch ein Verfahren, bei dem ein tetrachlorsilanhaltiges Eduktgas mit einem wasserstoffhaltigen Eduktgas bei einer Temperatur von 900°C bis 1300°C umgesetzt wird, wobei eine trichlorsilanhaltige Produktmischung entsteht, dadurch gekennzeichnet, dass die Umsetzung bei einem überkritischen Druck der Eduktgase von 14-24 bar erfolgt.

Vorzugsweise besteht das tetrachlorsilanhaltige Eduktgas aus Tetrachlorsilan. Vorzugsweise besteht das wasserstoffhaltige Eduktgas aus Wasserstoff. Vorzugsweise besteht die trichlorsilanhaltige Produktmischung aus Trichlorsilan, Chlorwasserstoff sowie nicht umgesetzten Eduktgase.

Die Reaktionsgeschwindigkeit, mit der sich das chemische Gleichgewicht einstellt, geht mit dem Anstieg des Drucks einher. Bei einem Druck über dem kritischen Druck der Mischung der Eduktgase (des Eduktgemisches) stellt sich das chemische Gleichgewicht nahezu unabhängig von der Verweilzeit der Eduktgase im Reaktionsraum ein. Eine Druckerhöhung über den kritischen Druck des Eduktgemisches hinaus erhöht die Trichlorsilan Ausbeute nicht weiter, so dass als optimaler Druck ein Druck oberhalb des kritischen Druckes des Eduktgemisches gewählt wird.

Der kritische Druck von Wasserstoff liegt bei ca. 12,9 bar, der kritische Druck des Tetrachlorsilan liegt bei 35,9 bar. Der kritische Druck des Gemisches ergibt sich aus dem Molanteil der Komponenten im Gemisch multipliziert mit dem kritischen Druck der Einzelkomponente. Überkritisch liegt das Gemisch vor, sobald der Systemdruck größer ist als der kritische Druck des Gemisches. Dies ist z.B. bei einem Molverhältnis von Tetrachlorsilan:H₂=1:3 bei 18,7 bar der Fall.

Vorzugsweise liegen Tetrachlorsilan und Wasserstoff in einem Molverhältnis von 1:1 bis 1:100 vor. Besonders bevorzugt wird das Molverhältnis Tetrachlorsilan : H₂ im Bereich 1:1 bis 1:10 und insbesondere bevorzugt im Bereich von 1:1 bis 1: 3 Die dadurch erreichte erhöhte Effizienz zeigt sich bei gegebener Reaktorgröße in einer erhöhten Raumzeitausbeute an Trichlorsilan, sowie durch eine höhere Energieeffiziens des Gesamtprozesses.

Das erfindungsgemäße Verfahren findet, wie für das Hochtemperaturverfahren üblich, ohne Zusatz weiterer Komponenten wie z.B. eines Katalysators statt. Bevorzugt erfolgt die Umsetzung bei einer Temperatur von 950 - 1200 °C.

Die Verweilzeit der Eduktgase in der Reaktionszone beträgt vorzugsweise 200 - 0,05 Sekunden, besonders bevorzugt 10 bis 0,1 Sekunden.

Das Produktgemisch wird anschließend vorzugsweise in einer Abkühlzeit von 200 bis 0,05, bevorzugt 10 bis 0,1 Sekunden auf 300°C gekühlt. Die Abkühlung erfolgt vorzugsweise mittels eines Gegenstromwärmetauschers z.B. wie in DE 3024319 beschrieben.

Unter den genannten Bedingungen zeigt sich eine deutlich verbesserte Trichlorsilanausbeute. Bei den genannten Verweilzeiten und Abkühlzeiten auf 300°C wird bei einem Druck von einem bar und einem Molverhältnis von 1:3 eine Trichlorsilan Ausbeute von ca. 11 -12 Gew.% erzielt. Bei einer Drucksteigerung auf 5 bar wird eine Trichlorsilan Ausbeute von ca. 13,5 Gew. % Trichlorsilan erreicht. Bei höheren Drücken im Bereich des kritischen Drucks des Eduktstroms wird die höchste Trichlorsilanausbeute von nahezu 20% erreicht.

Das erfindungsgemäße Verfahren ermöglicht eine hohe Trichlorsilan-Ausbeute bei gleichzeitiger Energierückgewinnung. Zudem ermöglicht es bei gegebener Reaktorgröße eine höhere Raumzeitausbeute als herkömmliche Verfahren und eine damit einhergehende Reduktion der Abwärme des Reaktors sowie eine Verkleinerung der peripheren Vorrichtungen, wie z.B. des Wärmetauschers.

Das erfindungsgemäße Verfahren kann in einem üblichen Reaktor zur Hydrogenierung von SiCl₄, durchgeführt werden. Vorzugsweise wird es in einem Reaktor durchgeführt, dessen mit den Reaktionsgasen in Berührung kommenden Innenwände mit Bauteilen auf der Basis von Siliciumnitrid oder Siliciumcarbid ausgekleidet sind oder aus den genannten Materialien bestehen. Ein solcher Reaktor ist beispielsweise aus DE 102005046703 bekannt.

Wenn der Reaktor aus dem bei der Hochtemperaturreaktion üblicherweise verwendeten unlegierten C-Stahl besteht, so sollte, die Temperatur der Reaktorwandung mit einem Kühlmedium unter 200 °C gehalten werden. Dazu ist der Reaktor vorzugsweise mit einer Doppelwand versehen, durch die Kühlmedium fließt. Als Kühlmedium kommen Wasser, aber auch Silane wie z.B. SiCl₄ in Frage. Alternativ und um den Kühlbedarf zu vermeiden kann der Reaktor auch aus einem höher legierten Stahl, wie z.B. X12CrMo7, aufgebaut sein.

Vorzugsweise wird das erfindungsgemäße Verfahren bei einem Systemdruck des Eduktstroms im überkritischen Bereich, worunter die bereits genannten Druckbereiche zu verstehen sind, und bei einem Systemdruck des Produktstroms im unterkritischen Bereich durchgeführt, worunter ein Systemdruck zu verstehen ist, der kleiner ist als der kritische Druck des Produktgemisches. Dies wird z.B. dadurch erreicht, dass das Produktgemisch nach der Reaktionszone sofort entspannt wird. Besonders bevorzugt wird das erfindungsgemäße Verfahren in einem Reaktor mit einem integrierten Wärmetauscher durchgeführt.

Im Folgenden wird die Erfindung anhand von Beispielen sowie Vergleichsbeispielen weiter erläutert. Die in den Beispielen beschriebenen Versuche wurden in einem Quarzglas Reaktor durchgeführt, der von einer druckfesten Stahlhülle umgeben ist. Das gesamte Reaktorvolumen mit integriertem Wärmetauscher kann unter Druck gesetzt werden. Als Druckerzeuger dient Wasserstoff der über einen Verdichter auf den gewünschten Druck verdichtet wird. Dieser Reaktor wird im Folgenden als Hochtemperaturreaktor bezeichnet.

### Beispiel 1:

Ein Gasgemisch aus 25 Mol% Tetrachlorsilan und 75 Mol. % Wasserstoff wurde bei einer Temperatur von 950 °C, und den in Tab. 1 genannten Druckstufen und einer Verweilzeit von einer sec. in einem Hochtemperaturreaktor jeweils zur Reaktion gebracht. Dabei wird das Gasgemisch in einer Wärmetauschereinheit durch die aus dem Reaktor strömenden heißen Gase vorgewärmt und schließlich bei einer Temperatur von 950°C durch einen Hochtemperaturreaktor geleitet. Die Zusammensetzung des aus dem Reaktor austretenden Produktgases, eines Gemisches aus SiHCl₃ (TCS) und SiCl₄(STC) wurde mit Hilfe eines Gaschromatographen bestimmt. Die Messwerte sind in Tab. 1 wiedergegeben.

**Tab. 1**

| Druck [bar] | TCS Anteil (gemessen) [Gew.%] |
|---|---|
| 1 | 12,3 |
| 6 | 13,5 |
| 10 | 14,1 |
| 19 | 18,9 |
| 24 | 19,8 |
| 30 | 19,8 |

Der STC Gehalt ergibt sich jeweils als 100 Gew.% -TCS Anteil
Diese Ergebnisse zeigen, dass bei einem erhöhten Druck die Umsetzungsgeschwindigkeit bei einer Verweilzeit von ca. einer Sekunde sich stark erhöht und es nach Erreichen des kritischen Drucks des Eduktgemisches (hier 18.6 bar) zu keiner signifikanten Erhöhung der TCS Ausbeute mehr kommt.

### Beispiel 2:

Ein Gasgemisch aus 25 Mol% Tetrachlorsilan und 75 % Mol % Wasserstoff wurde in einer Wärmetauschereinheit durch die aus dem Reaktor strömenden heißen Gase vorgewärmt und schließlich bei einer Temperatur von 950°C durch einen Hochtemperaturreaktor geleitet. Die Verweilzeit im Reaktor beträgt 50 mSek, bzw. 500 mSek bzw. 5 Sekunden. Die Abkühlzeit aus dem Reaktor wird konstant bei ca. einer Sekunde gehalten. Der Druck wurde wie in Tab. 2 angegeben variiert. Die Zusammensetzung des aus dem Reaktor austretenden Produktgases, eines Gemisches aus SiHCl₃ und SiCl₄ wurde mit Hilfe eines Gaschromatographen bestimmt. Die Messwerte sind in Tab. 2 wiedergegeben.

**Tab. 2**

| Druck | Trichlorsilan [Gew.%] 50 mSek Verweilzeit | Trichlorsilan [Gew.%] 500 mSek Verweilzeit | Trichlorsilan [Gew.%] 5 Sek Verweilzeit |
|---|---|---|---|
| 1 | 11,8 | 12,0 | 12,0 |
| 10 | 12,8 | 13,3 | 14,0 |
| 19 | 18,6 | 18,8 | 18,6 |
| 24 | 19,2 | 19,7 | 19,3 |

Das Beispiel zeigt dass die Produktionsgeschwindigkeit im Druckbereich > pkrit (hier 18.6 bar) unabhängig von der Verweilzeit im Reaktionsraum ist.

## Patentansprüche

1. Verfahren, bei dem ein tetrachlorsilanhaltiges Eduktgas mit einem wasserstoffhaltigen Eduktgas bei einer Temperatur von 900°C bis 1300°C umgesetzt wird, wobei eine trichlorsilanhaltige Produktmischung entsteht, **dadurch gekennzeichnet, dass** die Umsetzung bei einem überkritischen Druck der Eduktgase von 14 - 24 bar erfolgt.

2. Verfahren gemäß Anspruch 1, **dadurch gekennzeichnet, dass** Tetrachlorsilan und Wasserstoff in einem Molverhältnis von 1:1 bis 1:10 und insbesondere bevorzugt von 1:1 bis 1 : 3 vorliegt.

3. Verfahren gemäß einem der Ansprüche 1 bis 2, **dadurch gekennzeichnet, dass** die Eduktgase in der Reaktionszone 200 - 0,05 Sekunden, bevorzugt 10 bis 0,1 Sekunden verweilen.

4. Verfahren gemäß einem der Ansprüche 1 bis 3, **dadurch gekennzeichnet, dass** es bei einem Systemdruck des Eduktstroms im überkritischen Bereich und einem Systemdruck des Produktstroms im unterkritischen Bereich durchgeführt wird.

5. Verfahren gemäß Anspruch 4, **dadurch gekennzeichnet, dass** der Systemdruck des Produktstroms im unterkritischen Bereich durch ein Entspannen nach der Reaktionszone erreicht wind.

## Claims

1. Process in which a tetrachlorosilane-containing feed gas is reacted with a hydrogen-containing feed gas at a temperature of from 900°C to 1300°C to form a trichlorosilane-containing product mixture, **characterized in that** the reaction is carried out at a supercritical pressure of the feed gases of 14-24 bar.

2. Process according to Claim 1, **characterized in that** tetrachlorosilane and hydrogen are present in a molar ratio of from 1:1 to 1:10 and particularly preferably from 1:1 to 1:3.

3. Process according to either of Claims 1 and 2, **characterized in that** the feed gases reside in the reaction zone for 200-0.05 seconds, preferably from 10 to 0.1 seconds.

4. Process according to any of Claims 1 to 3, **characterized in that** it is carried out at a system pressure of the feed stream in the supercritical range and a system pressure of the product stream in the subcritical range.

5. Process according to Claim 4, **characterized in that** the system pressure of the product stream in the subcritical range is achieved by depressurization after the reaction zone.

## Revendications

1. Procédé dans lequel un gaz de départ contenant du tétrachlorosilane est transformé avec un gaz de départ contenant de l'hydrogène à une température de 900°C à 1300°C, un mélange de produits contenant du trichlorosilane se formant, **caractérisé en ce que** la transformation a lieu à une pression surcritique des gaz de départ de 14 à 24 bars.

2. Procédé selon la revendication 1, **caractérisé en ce que** le tétrachlorosilane et l'hydrogène se trouvent dans un rapport molaire de 1:1 à 1:10 et de manière particulièrement préférée de 1:1 à 1:3.

3. Procédé selon l'une quelconque des revendications 1 à 2, **caractérisé en ce que** les gaz de départ restent 200 à 0,05 secondes, de préférence 10 à 0,1 secondes dans la zone de réaction.

4. Procédé selon l'une quelconque des revendications 1 à 3, **caractérisé en ce qu'**il est réalisé à une pression de système du flux de départ dans la plage surcritique et à une pression de système du flux de produits dans la plage sous-critique.

5. Procédé selon la revendication 4, **caractérisé en ce que** la pression de système du flux de produits dans la plage sous-critique est atteinte par une détente en aval de la zone de réaction.
